# EUROPÄISCHE PATENTSCHRIFT

(11) **EP 2 940 493 B1**
(45) Veröffentlichungstag und Bekanntmachung des Hinweises auf die Patenterteilung: **27.09.2017**
(21) Anmeldenummer: 14166892.1
(22) Anmeldetag: 02.05.2014
(51) Int. Cl.: G01W 1/16, G01C 21/36, B60R 1/12

(54) **Gewitterfrühwarnsystem für ein Fahrzeug**
Early storm warning system for a vehicle
Système d'alerte précoce aux orages pour un véhicule

(43) Veröffentlichungstag der Anmeldung: 04.11.2015
(73) Patentinhaber: SMR Patents S.à.r.l., 1653 Luxembourg (LU)
(72) Erfinder: Wieczorek, Romeo, 73732 Esslingen (DE); Herrmann, Andreas, 71364 Winnenden-Baach (DE)
(74) Vertreter: Weber-Bruls, Dorothée

(56) Entgegenhaltungen:
- DE-A1- 4 322 937
- US-A1- 2001 039 475
- US-A1- 2007 094 262
- US-A1- 2008 122 424

## Beschreibung

Die vorliegende Erfindung betrifft ein Gewitterfrühwarnsystem eines Fahrzeugs mit mindestens einem Steuergerät, das einen Sensor zum Erfassen mindestens eines elektromagnetischen Signals, und einen Prozessor aufweist, durch den das durch den Sensor erfasste Signal interpretierbar ist und ein Gewitter erfassbar ist, und mit einer Anzeigeeinrichtung, durch die zumindest bei erfassten Gewitter durch den Prozessor ein Warnsignal anzeigbar ist. Darüber hinaus betrifft die Erfindung eine Rückblickvorrichtung mit einem derartigen Gewitterfrühwarnsystem, ein Verfahren zum Anzeigen eines Gewitterwarnsignals sowie ein Kraftfahrzeug mit einer derartigen Rückblickvorrichtung und/oder mit einem derartigen Gewitterfrühwarnsystem.

Fahrassistenzsysteme nehmen auf Basis von Umgebungssensoren wie Funk, Radar, Video, Infrarot und Ultraschall das Umfeld des Fahrzeugs wahr und interpretieren es. Sie unterstützen den Fahrer in vielen Fahrsituationen, liefern ihm Informationen zur Routenplanung von externen Informationsquellen, beispielsweise Staumeldungen oder Wetterinformationen, und erhöhen Fahrkomfort und Fahrsicherheit Die Informationen von externen Informationsquellen umfassen, insbesondere im Bereich der Wetterinformationen, Prognosen, die für einen aktuellen Standort des Kraftfahrzeugs, insbesondere bei Unwettern, ungenau sein können. Insbesondere in Unwettern mit schwerem Hagel kann es zu einer Beschädigung des Kraftfahrzeugs kommen, die sich auf das Fahrverhalten und die Sicherheit der Fahrzeuginsassen auswirken können.

Ein Gewitterfrühwarnsystem ist bekannt aus US 2008/0122424 A1, mit dem Gewitterdaten erfassbar sind.

Aus DE 43 22 937 A1 ist eine Informationseinrichtung für ein Kraftfahrzeug bekannt, durch die von extern an die Informationseinrichtung zugeführten Daten anzeigbar sind.

Es ist eine Aufgabe einer Ausführungsform der Erfindung, den Fahrer eines Fahrzeugs möglichst frühzeitig vor einem Unwetter zu warnen.

Diese Aufgabe wird durch die Merkmale der unabhängigen Ansprüche gelöst. Vorteilhafte Ausbildungsformen sind Gegenstand der abhängigen Ansprüche.

Im Folgenden wird ein Gewitterfrühwarnsystem für ein Fahrzeug, eine Rückblickvorrichtung für ein Kraftfahrzeug mit einem solchen Gewitterfrühwarnsystem, ein Kraftfahrzeug mit einer solchen Rückblickvorrichtung und ein Verfahren zum Anzeigen eines Gewitterwarnsignals an einer Rückblickvorrichtung beschrieben.

Die Aufgabe wird gelöst durch ein Gewitterfrühwarnsystem bei dem die Anzeigeeinrichtung an oder in einer Rückblickvorrichtung des Kraftfahrzeugs anordenbar ist.

Ein solches Gewitterfrühwarnsystem hat den Vorteil, dass es in kompakter Weise an einer Rückblickvorrichtung angebracht werden kann, d.h. an einer Stelle, die der Fahrer zur Verkehrsüberwachung ohnehin im Blick hat. Ferner kann die Anzeigeeinrichtung in und/oder an einer Konsole des Kraftfahrzeugs angeordnet sein und beispielsweise im Bereich der Warnanzeigen, wie Ölstand, Reifendruck, Anschnall- sowie Türwarnung und dergleichen, bei Bedarf visualisierbar sein. Der Fahrer kann so rechtzeitig Vorkehrungen treffen, um sich vor dem Gewitter zu schützen, beispielsweise Schiebedach schließen, Cabrio-Verdeck zuklappen oder Fenster schließen. Ferner ist dem Fahrer hierdurch rechtzeitig eine Entscheidungshilfe gegeben, das Unwetter zu umfahren oder eine Parkmöglichkeit aufzusuchen und sich und sein Fahrzeug beispielsweise vor Hagelschäden zu schützen. Der Fahrer eines Motorrads kann so rechtzeitig gewarnt werden, damit er an geeigneter Stelle anhalten kann, um Schutzkleidung anzulegen. Eine Anzeigeeinrichtung in einer Rückblickvorrichtung hat ferner den Vorteil, dass sie in allen Fahrzeugen angebracht werden kann, an denen der Spiegel angebracht werden kann. Damit muss nicht für jedes Fahrzeug, egal ob PKW, LKW, Motorrad, Motorboot oder anderes ein eigenes Blitzfrühwarnsystem entwickelt werden. Die Herstellungskosten können damit entsprechend gesenkt werden.

Gemäß einer Ausführungsform des Gewitterfrühwarnsystems ist die Anzeigeeinrichtung an einem Fahrzeugaußenspiegel oder einem Fahrzeuginnenspiegel anordenbar. Dies hat den Vorteil, dass die Anzeigeeinrichtung im Aufmerksamkeitsfeld des Fahrers angeordnet ist, so dass er ein Warnsignal dort sehr schnell wahrnimmt.

Gemäß einer Ausführungsform des Gewitterfrühwarnsystems umfasst der Sensor eine Antenne, die ausgelegt ist, eine von dem Gewitter ausgehende luftelektrische Entladung und/oder elektromagnetische Strahlung zu empfangen. Dies hat den Vorteil, dass die Antenne zumindest ein Gewitter detektieren kann, insbesondere bevor der Fahrer das Gewitter sichtbar oder hörbar wahrnehmen kann. Das Gewitterfrühwarnsystem hat somit eine sehr schnelle Reaktionszeit.

Gemäß einer Ausführungsform des Gewitterfrühwarnsystems ist eine Resonanzfrequenz der Antenne mit einer Genauigkeit von etwa +/- 3,5% einstellbar. Dies hat den Vorteil, dass die Antenne sehr genau auf eine luftelektrische Entladung des Gewitters eingestimmt werden kann, so dass es nur zu einer äußerst geringen Fehldetektionsrate kommt.

Gemäß einer Ausführungsform des Gewitterfrühwarnsystems umfasst die Antenne eine Schleifenantenne, insbesondere eine Schleifenantenne mit einer Resonanzfrequenz von etwa 500 kHz und einer Güte von etwa 15. Dies hat den Vorteil, dass eine Schleifenantenne leicht zu installieren ist, insbesondere im Fahrzeugaußenspiegel oder im Fahrzeuginnenspiegel. Mit einer geeigneten Länge kann die Schleife in einfacher Weise auf die Resonanzfrequenz der luftelektrischen Entladung bzw. das Blitzsignal eines Gewitters abgestimmt werden.

Gemäß einer Ausführungsform des Gewitterfrühwarnsystems umfasst das Steuergerät eine analoge Eingangsstufe, die ausgelegt ist, das von dem Sensor erfasste Signal zu verstärken und zu demodulieren. Dies hat den Vorteil, dass auch schwache Signale von weit entfernt liegenden Gewittern durch die Verstärkung detektiert werden können und in einem Basisfrequenzbereich einfach verarbeitet werden können.

Gemäß einer Ausführungsform des Gewitterfrühwarnsystems ist die analoge Eingangsstufe kalibrierbar, insbesondere auf Signale mit einer mittleren Frequenz von etwa 500 kHz und einer Bandbreite von etwa 33 kHz. Dies hat den Vorteil, dass das Gewitterfrühwarnsystem genau auf die luftelektrischen Entladungen eines Gewitters abstimmbar ist. Mit genau kalibrierter Eingangsstufe erhöht sich die Detektionsgenauigkeit.

Gemäß einer Ausführungsform des Gewitterfrühwarnsystems ist der Prozessor ausgelegt, basierend auf dem von dem Sensor erfassten Signal zwischen dem Gewitter und einer Störung zu unterscheiden. Dies hat den Vorteil, dass das Gewitterfrühwarnsystem äußerst zuverlässig ist und falsche Warnsignale nur sehr selten auftreten.

Gemäß einer Ausführungsform des Gewitterfrühwarnsystems ist der Prozessor ausgelegt, basierend auf dem von dem Sensor erfassten Signal eine Distanz zu dem Gewitter zu bestimmen. Dies hat den Vorteil, dass der Fahrer mittels der Distanz zu dem Gewitter selbst entscheiden kann, wann er Sicherheitsmaßnahmen einleiten sollte. Außerdem gibt die Distanz einen Grad der Gefahr an, so dass basierend auf der Distanz abgestufte Sicherheitsmaßnahmen eingeleitet werden können.

Gemäß einer Ausführungsform des Gewitterfrühwarnsystems ist die Anzeigeeinrichtung ausgelegt, die von dem Prozessor bestimmte Distanz zu dem Gewitter anzuzeigen. Dies hat den Vorteil, dass der Fahrer stets im Blick hat wie weit er sich noch von dem Gewitter entfernt aufhält.

Gemäß einer Ausführungsform des Gewitterfrühwarnsystems umfasst die Anzeigeeinrichtung zumindest ein Leuchtmittel, das basierend auf der Distanz zu dem Gewitter verschiedene Farben annimmt. Dies hat den Vorteil, dass der Fahrer anhand der verschiedenen Farben leicht den Grad der Gefahr abschätzen kann. Beispielsweise kann eine Farbabstufung von Grün nach Rot mit der Entfernung zum Gewitterzentrum korrelieren.

Gemäß einer Ausführungsform des Gewitterfrühwarnsystems umfasst das Steuergerät einen Ausgang, der ausgelegt ist, bei einem detektierten Gewitter oder bei Ansprechen eines Regensensors ein Schiebedach, eine Fensterschließanlage oder ein Cabrio-Verdeck anzusteuern. Dies hat den Vorteil, dass der Fahrer aufgrund der automatisierten Sicherheitsmaßnahmen seine Konzentration auf das Fahren richten kann ohne abgelenkt zu werden. Das Steuergerät kann somit in den beiden Fällen, wenn ein Gewitter erkannt wird und wenn Regen erkannt wird, die geeigneten Sicherheitsmaßnahmen treffen. Ein Blitzdetektor kann dazu dienen, einen Blitz zu erkennen und hierrauf entsprechend ein Gewitter detektieren. Ein Regensensor kann dazu dienen, Regen zu erkennen. Mit beiden Sensoren kann somit ein Gewitter ohne oder mit Regen sowie Regen ohne Gewitter erkannt werden. Es versteht sich, dass das Gewitterfrühwarnsystem bzw. der Gewittersensor eine ausreichend kurze Ansprechzeit aufweist, die es erlaubt, das Cabrio-Verdeck zu schließen bzw. die Fenster zu schließen noch bevor der Regen einsetzt.

Gemäß einer weiteren Ausführungsform des Gewitterfrühwarnsystems ist das Steuergerät zusammen mit der Anzeigeeinrichtung in der Rückblickvorrichtung untergebracht. Dies hat den Vorteil, dass Steuergerät zusammen mit Anzeigeeinrichtung als eine kompakte Einheit entwickelt werden können. Jeder Außenspiegel ist dann unabhängig vom Typ des Fahrzeugs, in dem er angebracht wird.

Gemäß einer weiteren Ausführungsform des Gewitterfrühwarnsystems ist das Steuergerät im Fahrzeug untergebracht und kommuniziert über eine Kommunikationsschnittstelle mit der Anzeigeeinrichtung. Dies hat den Vorteil, dass das Gewitterfrühwarnsystem auch mit solchen Fahrzeugen betrieben werden kann, die wenig Platz im Spiegelbereich haben, so dass dort gerade die Anzeigeeinrichtung untergebracht werden kann, aber der Platz nicht mehr für das Steuergerät ausreicht.

Gemäß einer weiteren Ausführungsform des Gewitterfrühwarnsystems wird das Gewitterfrühwarnsystem über eine Fahrzeugstromversorgung mit Energie versorgt. Dies hat den Vorteil, dass das Gewitterfrühwarnsystem in allen Fahrzeugen installiert werden kann. Das Gewitterfrühwarnsystem braucht somit nicht über eine eigene Stromversorgung verfügen sondern kann mittels Anschluss an die Fahrzeugstromversorgung mit Energie versorgt werden. Somit kann das Gewitterfrühwarnsystem baulich sehr kompakt ausgeführt sein.

Gemäß einer weiteren Ausführungsform des Gewitterfrühwarnsystems wird das Gewitterfrühwarnsystem über eine solarbetriebene Energieversorgung mit Energie versorgt. Dies hat den Vorteil, dass das Gewitterfrühwarnsystem unabhängig von einer Stromversorgung des Fahrzeugs ist; somit brauchen auch keine Kabel zu einer Fahrzeugstromversorgung verlegt werden.

Ausführungsformen des Gewitterfrühwarnsystems zeichnen sich dadurch aus, dass sie in einem Fahrzeug wie einem Auto ein Gewitter erkennen können. Ausführungsformen des Gewitterfrühwarnsystems zeichnen sich dadurch aus, dass sie das Gewitter von der Distanz her messen können. Ausführungsformen des Gewitterfrühwarnsystems zeichnen sich dadurch aus, dass sie im Spiegel eine Warnanzeige aufweisen, die dem Fahrer das Gewitter in einer bestimmten Distanz anzeigen kann. Ausführungsformen des Gewitterfrühwarnsystems zeichnen sich dadurch aus, dass sie verschiedene Komponenten, wie beispielsweise Schiebedächer, Cabrio-Verdecke, etc. steuern können.

Darüber hinaus wird die Aufgabe gelöst durch eine Rückblickvorrichtung für ein Kraftfahrzeug mit mindestens einem Gewitterfrühwarnsystem mit mindestens einem der zuvor genannten Merkmale. Die Rückblickvorrichtung kann einen Fahrzeugspiegel umfassen, beispielsweise einen Innen- oder Außenspiegel. Darüber hinaus kann die Rückblickvorrichtung einen Bildschirm umfassen, der eine Kameraaufiiahme visualisiert und beispielsweise als Rückblickmittel dient.

Die Aufgabe wird ferner gelöst durch ein Verfahren zum Anzeigen eines Gewitterwarnsignals an einer Rückblickvorrichtung eines Kraftfahrzeugs mit einem erfindungsgemäßen Gewitterfrühwarnsystem, mit den folgenden Schritten: Erfassen eines von einem Gewitter ausgehenden Signals; Berechnen einer Energie des Signals; Detektieren des Gewitters basierend auf der berechneten Energie des Signals; und

Anzeigen eines Gewitterwarnsignals an der Rückblickvorrichtung bei Detektion des Gewitters.

Ein solches Verfahren hat den Vorteil, dass der Fahrer eines Fahrzeugs unter Verwendung dieses Verfahrens rechtzeitig Vorkehrungen treffen kann, um sich vor einem Gewitter zu schützen, beispielsweise Schiebedach schließen, Cabrio-Verdeck zuklappen oder Fenster schließen. Der Fahrer eines Motorrads kann so rechtzeitig gewarnt werden, damit er an geeigneter Stelle anhalten kann, um Schutzkleidung anzulegen.

Schließlich wird die Aufgabe gelöst durch ein Kraftfahrzeug mit einer Rückblickvorrichtung mit mindestens einem der zuvor genannten Merkmale und/oder mit einem Gewitterfrühwarnsystem mit mindestens einem der zuvor genannten Merkmale.

Weitere Ausführungsbeispiele werden Bezug nehmend auf die beiliegenden Zeichnungen erläutert. Es zeigen:
- Fig. 1: eine schematische Darstellung eines Gewitterfrühwarnsystems gemäß einer ersten Ausführungsform;
- Fig. 2: eine schematische Darstellung eines Fahrzeugaußenspiegels in Vorderansicht mit verschiedenen Stellen zum Anbringen einer Anzeigeeinrichtung gemäß dreier Ausführungsformen;
- Fig. 3: eine schematische Darstellung eines geöffneten Fahrzeugaußenspiegels in Rückansicht mit verschiedenen Stellen zum Anbringen eines Steuergeräts (ECU) gemäß zweier Ausfiihrungsformen;
- Fig. 4: eine schematische Darstellung eines Fahrzeuginnenspiegels in Vorderansicht mit Anzeigeeinrichtung und integriertem Steuergerät (ECU) gemäß einer Ausführungsform;
- Fig. 5: eine schematische Darstellung des Fahrzeuginnenspiegels in Vorderansicht mit Anzeigeeinrichtung und extern angebrachtem Steuergerät (ECU) gemäß einer Ausführungsform;
- Fig. 6a)-6g): schematische Darstellungen verschiedener Ausführungsformen von Schleifenantennen für ein Gewitterfrühwarnsystem;
- Fig. 7: eine graphische Darstellung der Detektionswirksamkeit eines Algorithmus zur Detektion eines Blitzes und darauf ansprechende Erkennung eines Gewitters in Abhängigkeit der Distanz zu einem Gewitterzentrum für verschiedene Abstimmungsgenauigkeiten gemäß einer Ausfiihrungsform;
- Fig. 8: eine schematische Darstellung eines Verfahrens zum Anzeigen eines Gewitterwarnsignals an einem Rückblickvorrichtung gemäß einer Ausführungsform.

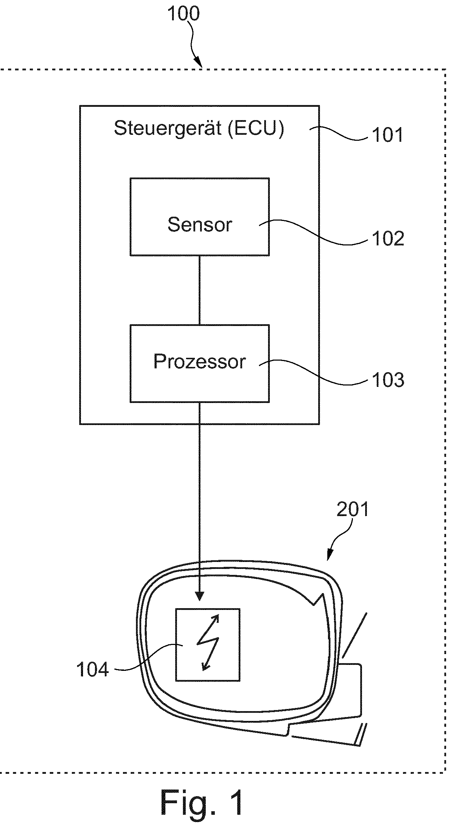

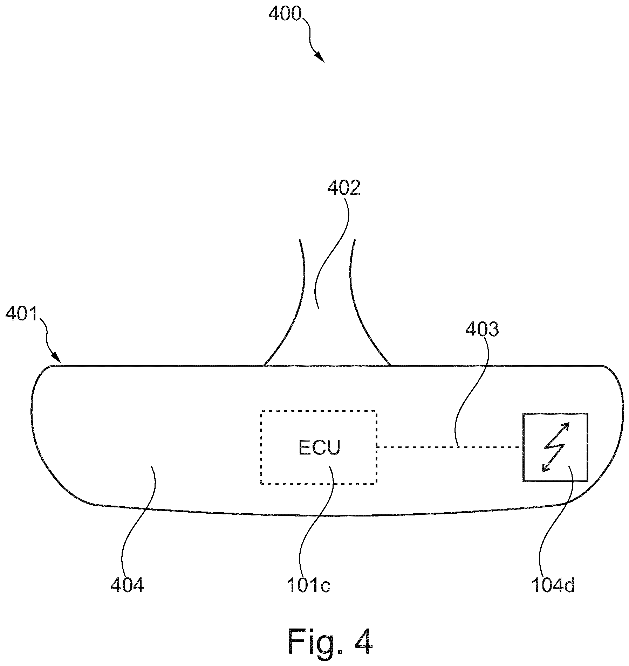

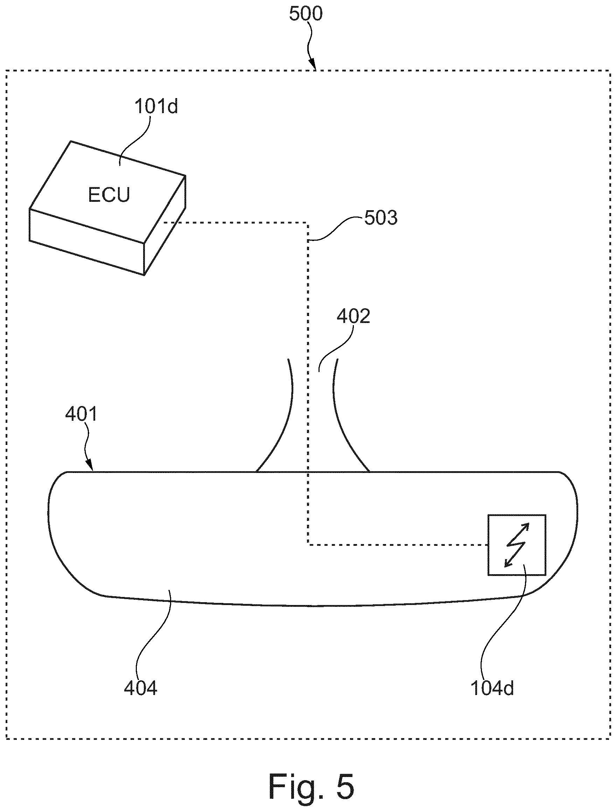

Fig. 1 zeigt eine schematische Darstellung eines Gewitterfrühwarnsystems 100 für ein Fahrzeug gemäß einer Ausführungsform. Das Gewitterfrühwarnsystem 100 umfasst ein Steuergerät 101 und eine an einer Rückblickvorrichtung 201 angebrachte Anzeigeeinrichtung 104. Das Steuergerät 101 umfasst einen Sensor 102 und einen Prozessor 103, beispielsweise eine CPU (Central Processing Unit). Der Sensor 102 dient dazu, ein von einem Gewitter ausgehendes Signal zu erfassen. Der Prozessor 103 dient dazu, basierend auf dem erfassten Signal des Sensors 102 das Gewitter zu detektieren. Die Anzeigeeinrichtung 104 zeigt bei einem durch den Prozessor detektierten Gewitter ein Warnsignal (kenntlich gemacht durch das Blitzsymbol) an. Die Anzeigeeinrichtung 104 kann, wie in Fig. 1 gezeigt, an einem Fahrzeugaußenspiegel 201 angebracht sein oder, wie in den Figuren 4 und 5 gezeigt, an einem Fahrzeuginnenspiegel 401.

Der Sensor 102 kann eine Antenne aufweisen, die eine von dem Gewitter ausgehende luftelektrische Entladung empfangen kann. Eine Resonanzfrequenz der Antenne kann beispielsweise mit einer Genauigkeit von etwa +/- 3,5% einstellbar sein. Die Antenne kann beispielsweise als Schleifenantenne ausgeführt sein, beispielsweise mit einer Resonanzfrequenz von etwa 500 kHz und einer Güte von etwa 15. In einer Ausführungsform kann die Antenne eine Resonanzfrequenz im Bereich von etwa 400 kHz bis etwa 600 kHz und einer Güte im Bereich von etwa 14 bis etwa 16 aufweisen. Das Steuergerät 101 kann eine analoge Eingangsstufe umfassen, um das von dem Sensor 102 erfasste Signal zu verstärken oder zu verstärken und zu demodulieren. Die analoge Eingangsstufe und/oder die Antenne können kalibrierbar sein, beispielsweise auf Signale mit einer mittleren Frequenz von etwa 500 kHz und einer Bandbreite von etwa 33 kHz. In einer Ausführungsform können die analoge Eingangsstufe und/oder die Antenne kalibrierbar sein auf Signale mit einer mittleren Frequenz im Bereich von etwa 400 kHz bis etwa 600 kHz. In einer Ausführungsform können die analoge Eingangsstufe und/oder die Antenne kalibrierbar sein auf Signale mit einer Bandbreite im Bereich von etwa 20 kHz bis etwa 50 kHz.

Der Prozessor 103 kann basierend auf dem von dem Sensor 102 erfassten Signal zwischen dem Gewitter und einer Störung unterscheiden. Der Prozessor 103 kann ferner basierend auf dem von dem Sensor 102 erfassten Signal eine Distanz zu dem Gewitter bestimmen. Die Anzeigeeinrichtung 104 kann die von dem Prozessor 103 bestimmte Distanz zu dem Gewitter anzeigen. In einer Ausführungsform kann die Anzeigeeinrichtung 104 ein Leuchtmittel umfassen, beispielsweise eine Leuchtdiode (LED) oder eine Laserdiode, wobei das Leuchtmittel basierend auf der Distanz zu dem Gewitter verschiedene Farben annehmen kann.

Das Steuergerät 101 kann einen Ausgang aufweisen, mit dem bei einem detektierten Gewitter oder bei Ansprechen eines Regensensors ein Schiebedach, eine Fensterschließanlage oder ein Cabrio-Verdeck angesteuert werden können, um das Dach, die Fenster bzw. das Verdeck zu schließen. Das Steuergerät 101 kann zusammen mit der Anzeigeeinrichtung 104 in der Rückblickvorrichtung 201 untergebracht sein oder es kann an anderer Stelle im Fahrzeug untergebracht sein und über eine Kommunikationsschnittstelle mit der Anzeigeeinrichtung 104 kommunizieren. Es versteht sich, dass die Reaktionszeiten zum Ansprechen des Detektors ausreichend kurz sind, um den Fahrer zu warnen noch bevor der Regen einsetzt.

Das Gewitterfrühwarnsystem 100 kann über eine Fahrzeugstromversorgung oder über eine solarbetriebene Energieversorgung mit Energie versorgt werden.

Der Rückblickvorrichtung 201 kann dem Fahrer eine Warnung geben, wie weit er von einem Gewitter entfernt ist. Durch eine Distanzanzeige hat er die Möglichkeit festzustellen, ob er sich dem Gewitter nähert oder von ihm wegfährt und kann gegebenenfalls Vorkehrungen treffen, beispielsweise das Cabrio-Dach schließen oder das Gewitter umfahren. Das System 100 kann eine Reichweite von etwa 40 km aufweisen. Es kann das Vorhandensein von einem herannahenden Sturm mit Blitz über einen Algorithmus schätzen. Die Vorderkante des Sturms kann als der minimale Abstand von dem Sensor 102 definiert werden. Eine externe Antenne kann mit einem analogen AFE (Analog Front End) verbunden sein, welches das Signal verstärken und demodulieren kann. Ein Algorithmus kann das Blitzsignal bewerten und zwischen einem Blitzsignal und einer künstlichen Störung unterscheiden. Sollte das Signal künstlich sein, so kann sich das System zurücksetzen und wieder in einen Lauschbetrieb übergehen. Sollte das System einen Blitz erkennen, so kann das Signal an einen statistischen Distanzschätzblock weitergeleitet werden. Das System kann damit drei Zustände einnehmen: "Ausgeschaltet", "Abhörbetrieb" und "Signal-Verifikation". Die mittlere Frequenz des empfangenen Signals kann bei 500 kHz liegen und eine Bandbreite von 33 kHz aufweisen. Das System kann für den Außenbereich eingestellt sein. Ein Kalibrieren ist möglich.

Auf dem Prozessor 103 kann ein so bezeichneter "Blitz-Algorithmus" ablaufen. Dieser Blitz-Algorithmus kann in drei Phasen unterteilt sein: in einer ersten Phase kann das von dem Sensor 102 empfangene Signal validiert werden, d.h. daraufhin geprüft werden, ob es von einem Gewitter stammt oder aufgrund einer Störung erzeugt wurde. Ist das Signal als von einem Gewitter herrührend verifiziert, so kann in einer zweiten Phase eine Energie des Signals berechnet werden. In einer dritten Phase kann eine statistische Distanzschätzung basierend auf der berechneten Signalenergie vorgenommen werden, um die Distanz zum Gewitter zu bestimmen.

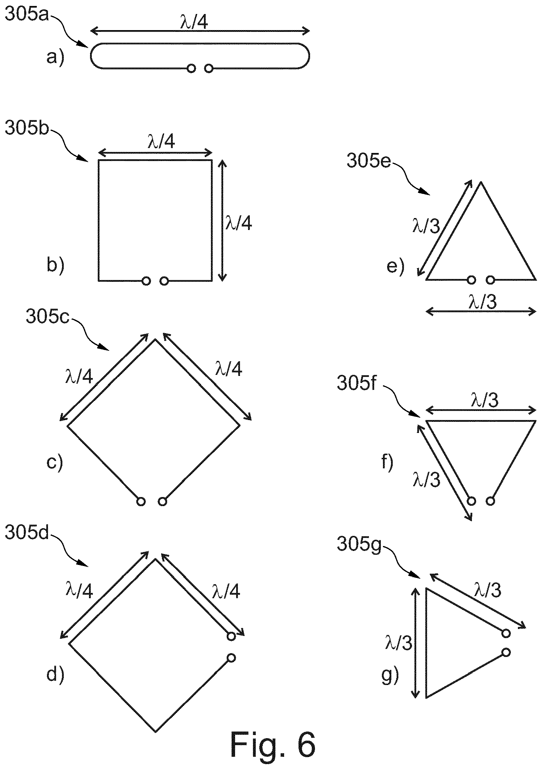

Der Sensor 102 kann eine Antenne umfassen, um das von dem Gewitter erzeugte luftelektrische Entladungssignal zu erfassen. Diese Antenne kann eine Schleifenantenne sein, beispielsweise in der Ausführung wie unten zu Fig. 6a) bis 6g) näher beschrieben. Die Schleifenantenne kann eine Resonanzfrequenz von 500 kHz und eine Güte von 15 aufweisen. Die Antenne kann beispielsweise mit einer Genauigkeit von +/- 3,5 % eingestellt werden.

Die Anzeigeeinrichtung 104, auch Monitoring System bezeichnet, kann beispielsweise ein Symbol umfassen, das in verschiedenen Farben leuchten kann abhängig von der berechneten Distanz zum Gewitterzentrum. Solch ein System wird auch als ein "ausgelasertes System" bezeichnet. Das Symbol kann in Form einer Digitalanzeige 104 realisiert sein, beispielsweise hinter dem lichtdurchlässigen Glas der Rückblickvorrichtungs 201, der die Anzeige 104 durchscheinen lässt. Die Anzeigeeinrichtung 104 kann auch im Rahmen der Rückblickvorrichtung 201 realisiert sein.

Das Gewitterfrühwarnsystem 100 kann einen Ausgang umfassen, um z.B. ein Cabrio-Verdeck zu steuern. Aufgrund der geringen Stromversorgung, die für das Gewitterfrühwarnsystem 100 benötigt wird, kann das Gewitterfrühwarnsystem 100 in einer Ausführungsform als autarkes System mit Solarenergie versorgt werden.

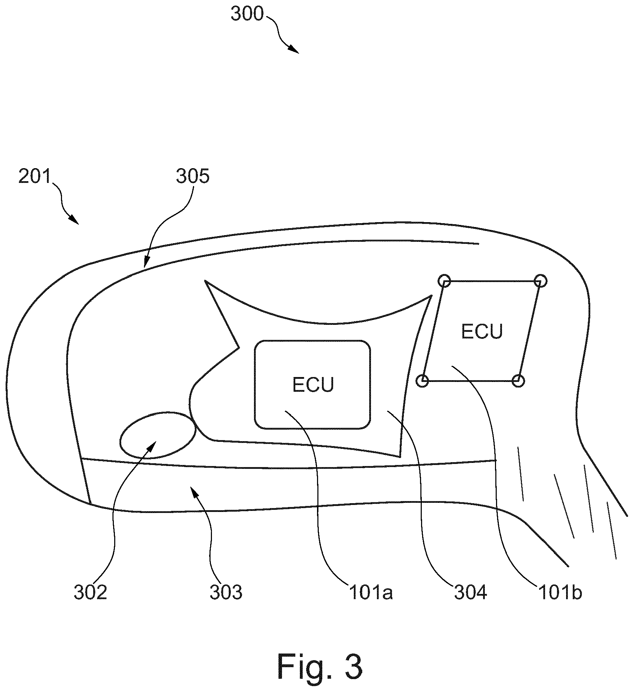

Das Steuergerät 101 kann direkt in der Rückblickvorrichtung platziert sein, beispielsweise wie unten in Fig. 3 und 4 beschrieben. Es kann aber auch an einem anderen Platz im Auto untergebracht sein, wo es mit dem Spiegel 201 kommunizieren kann.

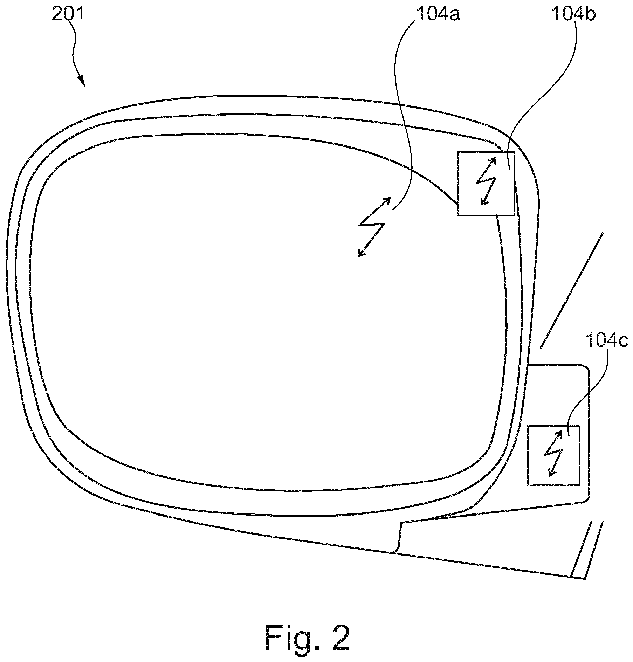

Fig. 2 zeigt eine schematische Darstellung eines Fahrzeugaußenspiegels 201 in Vorderansicht mit verschiedenen Stellen zum Anbringen einer Anzeigeeinrichtung 104a, 104b, 104c gemäß dreier Ausführungsformen. Die Anzeigeeinrichtung 104a, 104b, 104c ist Teil eines Gewitterfrühwarnsystem 100 wie oben zu Fig. 1 beschrieben und kann alternativ an verschiedenen Stellen am oder im Fahrzeugaußenspiegel angebracht sein. So kann die mit 104a bezeichnete Anzeigeeinrichtung hinter dem Spiegelglas des Außenspiegels 201 angebracht sein; die mit 104b bezeichnete Anzeigeeinrichtung kann am Rahmen des Außenspiegels 201 angebracht sein und die mit 104c bezeichnete Anzeigeeinrichtung kann an der Halterung des Außenspiegels 201 angebracht sein.

Fig. 3 zeigt eine schematische Darstellung eines geöffneten Fahrzeugaußenspiegels 201 in Rückansicht mit verschiedenen Stellen zum Anbringen eines Steuergeräts (ECU) 101a, 101b gemäß zweier Ausführungsformen. Das Steuergerät 101a, 101b ist Teil eines Gewitterfrühwarnsystems 300 bzw. 100 wie oben zu Fig. 1 beschrieben und kann alternativ an verschiedenen Stellen am oder im Fahrzeugaußenspiegel 201 angebracht sein. So kann das mit 101a bezeichnete Steuergerät hinter dem Spiegelglas 304 des Außenspiegels 201 angebracht sein; das mit 101b bezeichnete Steuergerät kann am Rahmen des Außenspiegels 201 angebracht sein. Der Fahrzeugaußenspiegel 201 kann an seinem unteren Ende einen Blinker 303 umfassen und im Innern kann die Mechanik für den "Power-Fold" 302, d.h. die gesteuerte Ein/Ausklappvorrichtung untergebracht sein. An der Oberseite des Außenspiegels 201 ist ausreichend Platz verfügbar. Dort kann eine Antenne 305 untergebracht sein, beispielsweise eine Schleifenantenne wie in den Figuren 6a) bis 6g) beschrieben. Natürlich kann die Antenne 305 auch an einer anderen Stelle des Außenspiegels 201 angebracht sein.

Fig. 4 zeigt eine schematische Darstellung eines Fahrzeuginnenspiegels 401 in Vorderansicht mit Anzeigeeinrichtung 104d und integriertem Steuergerät (ECU) 101c gemäß einer Ausführungsform.

Die Anzeigeeinrichtung 104d ist Teil eines Gewitterfrühwarnsystem 400 bzw. 100 wie oben zu Fig. 1 beschrieben und kann alternativ an verschiedenen Stellen am oder im Fahrzeuginnenspiegel angebracht sein. Fig. 4 zeigt eine Darstellung, in der die Anzeigeeinrichtung 104d hinter dem Spiegelglas 404 des Innenspiegels 401 angebracht ist. Alternativ kann die Anzeigeeinrichtung 104d auch am Rahmen des Innenspiegels 401 oder an der Halterung 402 des Innenspiegels 401 angebracht sein (in Fig. 4 nicht dargestellt).

Auch das Steuergerät 101c ist Teil des Gewitterfrühwarnsystems 400 und kann alternativ an verschiedenen Stellen am oder im Fahrzeuginnenspiegel 401 angebracht sein. Das in Fig. 4 gezeigte Steuergerät 101c kann in den Innenspiegel 401 integriert sein, d.h. hinter dem Spiegelglas 404 des Innenspiegels 401 angebracht sein. Alternativ kann das Steuergerät 101c auch am Rahmen des Innenspiegels 401 oder an der Halterung 402 des Innenspiegels 401 angebracht sein (in Fig. 4 nicht dargestellt). Das Steuergerät 101c kann über eine Kommunikationsschnittstelle, beispielsweise über ein Kabel 403 mit der Anzeigeeinrichtung 104d verbunden sein, um das Gewitterwarnsignal auf der Anzeigeeinrichtung 104d darzustellen.

Fig. 5 zeigt eine schematische Darstellung des Fahrzeuginnenspiegels 401 in Vorderansicht mit Anzeigeeinrichtung 104d und extern angebrachtem Steuergerät (ECU) 101d gemäß einer Ausführungsform.

Die Anzeigeeinrichtung 104d ist Teil eines Gewitterfrühwarnsystem 500 bzw. 100 wie oben zu Fig. 1 beschrieben und kann wie oben zu Fig. 4 beschrieben alternativ an verschiedenen Stellen am oder im Fahrzeuginnenspiegel angebracht sein. Auch das Steuergerät 101d ist Teil des Gewitterfrühwarnsystems 500 und kann an verschiedenen Stellen im Fahrzeug angebracht sein. In Gegensatz zu Fig. 4 ist das in Fig. 5 dargestellte Steuergerät 101d nicht am Innenspiegel 401 angebracht sondern kann an einer anderen Stelle im Fahrzeug angebracht sein, beispielsweise dort wo sich das Steuergerät für die übrige Fahrzeugelektronik befindet. Das Steuergerät 101d kann mit diesem Steuergerät integriert sein und eine Einheit bilden, so dass in dem Fahrzeug ein einziges Steuergerät sämtliche Steueraufgaben übernehmen kann. Das Steuergerät 101d kann mit der Anzeigeeinrichtung 104d über eine Kommunikationsschnittstelle 503, beispielsweise drahtgebunden oder über Funk, verbunden sein und kann so bei einem detektierten Gewitter die Anzeigeeinrichtung 104d dazu veranlassen, das Gewitterwarnsignal anzuzeigen.

Zur Detektion eines Blitzes und darauf ansprechender Gewittererkennung können verschiedene Arten von Antennen zum Einsatz kommen. Beispielsweise kann in einer bevorzugten Ausführungsform eine Ferritspule genutzt werden, im Weiteren auch als RFID (Radio Frequency Identification) Transponder COIL (Spule) bezeichnet, die speziell auf die Charakteristik des Blitzes abgestimmt werden kann und damit sehr kurze Reaktionszeiten bzw. Ansprechzeiten bis zur zuverlässigen Blitzdetektion aufweisen kann. Diese Antenne kann direkt auf dem PCB Board (Leiterplatte, Platine, gedruckte Schaltung) zusammen mit anderen Bauelementen des Gewitterfrühwarnsystems angebracht werden. Damit kann das Gewitterfrühwarnsystem inklusive Antenne sehr kompakt auf einer Leiterplatte implementiert werden. In weiteren Ausführungsformen kann das Gewitterfrühwarnsystem eine oder mehrere Schleifenantennen umfassen, beispielsweise einer solchen Art wie im Folgenden in den Figuren 6a) bis 6g) dargestellt.

Fig. 6a) bis 6g) zeigen schematische Darstellungen verschiedener Ausführungsformen von Schleifenantennen für ein Gewitterfrühwarnsystem. Fig. 6a) stellt einen Faltdipol 305a dar, der einer Zusammenschaltung von zwei horizontalen Dipolen entspricht, die übereinanderliegen und einen Speisepunkt besitzen. Sein Abstrahlverhalten ist bei horizontaler Ausrichtung horizontal gebündelt. Der Faltdipol 305a hat eine Länge entsprechend einer Viertel Wellenlänge (Lambda). Fig. 6b) zeigt eine Quadantenne 305b, deren elektrische Länge einer Wellenlänge entspricht, jede Seite hat eine Länge von einer Viertel Wellenlänge. Die Quadantenne 305b ist quadratisch und horizontal polarisiert. Fig. 6c) zeigt eine Quadantenne 305c, durch deren Bauweise ebenfalls eine horizontale Polarisation erzielt wird. Fig. 6d) zeigt eine vertikal polarisierte Quadantenne 305d. Fig. 6e) zeigt eine Delta-Loop Antenne 305e, deren elektrische Länge einer Wellenlänge entspricht, jede Seite hat eine Länge von einer Drittel Wellenlänge. Die Delta-Loop Antenne 305e ist dreiecksförmig und horizontal polarisiert. Fig. 6f) zeigt eine Delta-Loop Antenne 305f, durch deren Bauweise ebenfalls eine horizontale Polarisation erzielt wird. Fig. 6g) zeigt eine vertikal polarisierte Delta-Loop Antenne 305g.

Die Schleifenantennen 305a, 305b, 305c, 305d, 305e, 305f, 305g haben Richtcharakteristik und können als Sensoren in einem Gewitterfrühwarnsystem wie oben zu den Figuren 1 bis 5 beschrieben, eingesetzt werden. Beispielsweise können die Schleifenantennen am Außenspiegel oder am Innenspiegel so angebracht werden, dass ihre Richtcharakteristik in Fahrtrichtung oder leicht oberhalb der Fahrtrichtung weist, d.h. in die Richtung in der ein Gewitter zu erwarten ist.

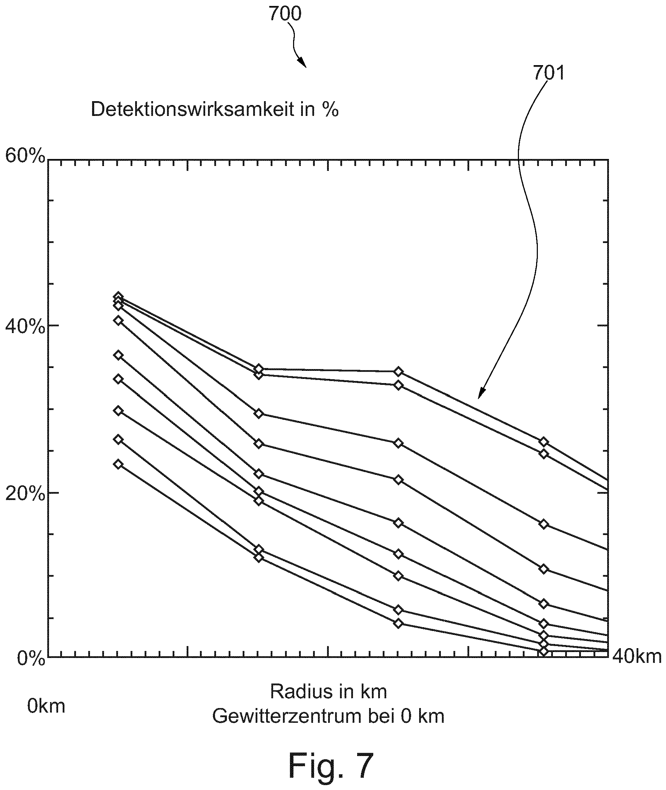

Fig. 7 zeigt eine graphische Darstellung 700 der Detektionswirksamkeit eines Algorithmus zur Detektion eines Blitzes und darauf ansprechender Erkennung eines Gewitters in Abhängigkeit der Distanz zu einem Gewitterzentrum für verschiedene Abstimmungsgenauigkeiten 701 gemäß einer Ausführungsform. Aus der Darstellung 700 kann man erkennen, dass je nach Sicherheitsstufe mit einer Sicherheit von 22 bis 44 Prozent ein Blitz detektiert werden kann. Sobald ein Blitz detektiert ist, wird ein Gewitter erkannt. Die Sicherheitsstufe kann eingestellt werden. Da ein Gewitter nicht nur aus einem Blitz bestehen muss, sondern meist auch weitere Blitze, Donner, Regen, Wind, Schauer etc. umfasst, kann eine zuverlässige Gewittererkennung schon bei einer geringen Anzahl auftretender und erkannter Blitze, beispielsweise von etwa 3-10 Blitzen erfolgen. In einer weiteren Ausführungsform kann die Detektion einen Zähler umfassen, beispielsweise im Bereich von 3 bis 9 einstellbar, um den ersten Blitzen in einem bestimmten Zeitraum Missachtung zu schenken. Damit kann die Zuverlässigkeit der Blitzdetektion weiter erhöht werden.

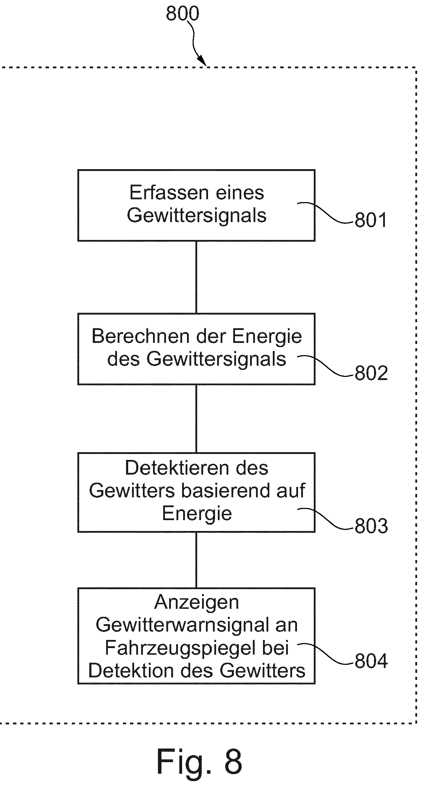

Fig. 8 zeigt eine schematische Darstellung eines Verfahrens 800 zum Anzeigen eines Gewitterwarnsignals an einer Rückblickvorrichtung gemäß einer Ausführungsform. Das Verfahren umfasst ein Erfassen 801 eines von einem Gewitter ausgehenden Signals; ein Berechnen 802 einer Energie des Signals; ein Detektieren 803 des Gewitters basierend auf der berechneten Energie des Signals; und ein Anzeigen 804 eines Gewitterwarnsignals an der Rückblickvorrichtung bei Detektion des Gewitters. Die Rückblickvorrichtung kann ein Fahrzeugaußenspiegel 201 sein, wie in den Figuren 1 bis 3 dargestellt und beschrieben oder ein Fahrzeuginnenspiegel 401 wie in den Figuren 4 und 5 dargestellt und beschrieben. Das Erfassen 801 kann mit einem Sensor erfolgen, beispielsweise einem Sensor wie in den Figuren 1 bis 5 beschrieben. Das Berechnen 802 und Detektieren 803 kann mit einem Steuergerät erfolgen, beispielsweise einem Steuergerät wie in den Figuren 1 bis 5 beschrieben. Das Anzeigen 804 kann mit einer Anzeigeeinrichtung erfolgen, beispielsweise einer Anzeigeeinrichtung wie in den Figuren 1 bis 5 beschrieben.

Ein weiterer Aspekt der Erfindung umfasst ein Computerprogrammprodukt, das direkt in den internen Speicher eines digitalen Computers geladen werden kann und Softwarecodeabschnitte umfasst, mit denen die Verfahrensschritte 801, 802, 803 und 804 des in Fig. 8 beschriebenen Verfahrens ausgeführt werden können, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, das Verfahren entsprechend der Beschreibung zu Figur 8 auszuführen. Der Computer kann Teil des oben zu den Figuren 1 bis 5 beschriebenen Steuergeräts sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

**Bezugszeichenliste**

| | | | |
|---|---|---|---|
| 100: | Gewitterfrühwarnsystem | 305e: | Schleifenantenne |
| 101: | Steuergerät | 305f: | Schleifenantenne |
| 101a: | Steuergerät | 305g: | Schleifenantenne |
| 101b: | Steuergerät | 400: | Gewitterfrühwarnsystem |
| 101c: | Steuergerät | 401: | Fahrzeuginnenspiegel |
| 101d: | Steuergerät | 402: | Spiegelhalterung |
| 102: | Sensor | 403: | Kommunikationsschnittstelle |
| 103: | Prozessor | 404: | Spiegelglas |
| 104: | Anzeigeeinrichtung | 500: | Gewitterfrühwarnsystem |
| 104a: | Anzeigeeinrichtung | 503: | Kommunikationsschnittstelle |
| 104b: | Anzeigeeinrichtung | 700: | Darstellung der Detektionswirksamkeit über die Distanz zum Gewitterzentrum |
| 104c: | Anzeigeeinrichtung | | |
| 104d: | Anzeigeeinrichtung | 800: | Verfahren zum Anzeigen eines |
| 201: | Außenspiegel | | Gewitterwarnsignals an einem |
| 300: | Gewitterfrühwarnsystem | | Rückblickvorrichtung |
| 302: | Power Fold, | 801: | Erfassen eines Gewittersignals |
| | Außenspiegeleinfahrmechanismus | | (1. Verfahrensschritt) |
| 303: | Blinker | 802: | Berechnen der Energie des |
| 304: | Spiegelglas | | Gewittersignals |
| 305: | Antenne | | (2. Verfahrensschritt) |
| 305a: | Schleifenantenne | 803: | Detektieren des Gewitters |
| 305b: | Schleifenantenne | | (3. Verfahrensschritt) |
| 305c: | Schleifenantenne | 804: | Anzeigen Gewitterwarnsignal |
| 305d: | Schleifenantenne | | (4. Verfahrensschritt) |

## Patentansprüche

1. Gewitterfrühwarnsystem (100, 300, 400, 500) eines Fahrzeugs mit mindestens einem Steuergerät (101, 101a, 101b, 101c, 101d), das einen Sensor (102) zum Erfassen mindestens eines elektromagnetischen Signals, und einen Prozessor (103) aufweist, durch den das durch den Sensor (102) erfasste Signal interpretierbar ist und ein Gewitter erfassbar ist, und mit einer Anzeigeeinrichtung (104, 104a, 104b, 104c, 104d), durch die zumindest bei erfassten Gewitter durch den Prozessor ein Warnsignal anzeigbar ist, **dadurch gekennzeichnet, dass**
die Anzeigeeinrichtung (104, 104a, 104b, 104c, 104d) an oder in einer Rückblickvorrichtung (201, 401) des Kraftfahrzeugs anordenbar ist.

2. Gewitterfrühwarnsystem (100, 300, 400, 500) nach Anspruch 1, **dadurch gekennzeichnet, dass**
die Anzeigeeinrichtung (104, 104a, 104b, 104c, 104d) an einem Fahrzeugaußenspiegel (201) oder einem Fahrzeuginnenspiegel (401) anordenbar ist.

3. Gewitterfrühwarnsystem (100, 300, 400, 500) nach Anspruch 1 oder 2, **dadurch gekennzeichnet, dass**
der Sensor (102) eine Antenne (305) umfasst, die ausgelegt ist, eine zumindest vom Gewitter ausgehende luftelektrische Entladung und/oder magnetische Strahlung zu empfangen.

4. Gewitterfrühwarnsystem (100, 300, 400, 500) nach Anspruch 3, **dadurch gekennzeichnet, dass**
die Antenne (305) eine Resonanzfrequenz umfasst, die mit einer Genauigkeit von etwa +/- 3,5% einstellbar ist.

5. Gewitterfrühwarnsystem (100, 300, 400, 500) nach Anspruch 3 oder 4, **dadurch gekennzeichnet, dass**
die Antenne (305) eine Schleifenantenne (305a, 305b, 305c, 305d, 305e, 305f, 305g) umfasst, insbesondere eine Schleifenantenne mit einer Resonanzfrequenz von 500 kHz und einer Güte von 15.

6. Gewitterfrühwarnsystem (100, 300, 400, 500) nach einem der vorstehenden Ansprüche, **dadurch gekennzeichnet, dass**
das Steuergerät (101, 101a, 101b, 101c, 101d) eine analoge Eingangsstufe umfasst, die ausgelegt ist, das von dem Sensor (102) erfasste Signal zu verstärken und/oder zu demodulieren.

7. Gewitterfrühwarnsystem (100, 300, 400, 500) nach Anspruch 6, **dadurch gekennzeichnet, dass**
die analoge Eingangsstufe kalibrierbar ist, insbesondere auf Signale mit einer mittleren Frequenz von 500 kHz und einer Bandbreite von 33 kHz.

8. Gewitterfrühwarnsystem (100, 300, 400, 500) nach einem der vorstehenden Ansprüche, **dadurch gekennzeichnet, dass**
der Prozessor (103) ausgelegt ist, basierend auf dem von dem Sensor (102) erfassten Signal zwischen dem Gewitter und einer Störung zu unterscheiden.

9. Gewitterfrühwarnsystem (100, 300, 400, 500) nach Anspruch 8, **dadurch gekennzeichnet, dass**
der Prozessor (103) ausgelegt ist, basierend auf dem von dem Sensor (102) erfassten Signal eine Distanz zu dem Gewitter zu bestimmen.

10. Gewitterfrühwarnsystem (100, 300, 400, 500) nach Anspruch 9, **dadurch gekennzeichnet, dass**
die Anzeigeeinrichtung (104, 104a, 104b, 104c, 104d) ausgelegt ist, die von dem Prozessor (103) bestimmte Distanz zu dem Gewitter anzuzeigen.

11. Gewitterfrühwarnsystem (100, 300, 400, 500) nach Anspruch 9 oder 10, **dadurch gekennzeichnet, dass**
die Anzeigeeinrichtung (104, 104a, 104b, 104c, 104d) zumindest ein Leuchtmittel umfasst, das basierend auf der Distanz zu dem Gewitter verschiedene Farben annimmt.

12. Gewitterfrühwarnsystem (100, 300, 400, 500) nach einem der vorstehenden Ansprüche, **dadurch gekennzeichnet, dass**
das Steuergerät (101, 101a, 101b, 101c, 101d) einen Ausgang umfasst, der ausgelegt ist, bei einem detektierten Gewitter oder bei Ansprechen eines Regensensors ein Schiebedach, eine Fensterschließanlage und/oder ein Cabrio-Verdeck anzusteuern.

13. Rückblickvorrichtung für ein Kraftfahrzeug mit mindestens einem Gewitterfrühwarnsystem (100, 300, 400, 500) nach einem der Ansprüche 1 bis 12.

14. Verfahren (800) zum Anzeigen eines Gewitterwarnsignals an einer Rückblickvorrichtung (201, 401) eines Kraftfahrzeugs mit einem Gewitterfrühwarnsystem (100, 300, 400, 500) nach einem der Ansprüche 1 bis 12, **gekennzeichnet durch** die folgenden Schritte:
Erfassen (801) eines von einem Gewitter ausgehenden Signals;
Berechnen (802) einer Energie des Signals;
Detektieren (803) des Gewitters basierend auf der berechneten Energie des Signals; und
Anzeigen (804) eines Gewitterwarnsignals an dem Rückblickvorrichtung (201, 401) bei Detektion des Gewitters.

15. Kraftfahrzeug mit mindestens einer Rückblickvorrichtung nach Anspruch 13, und/oder mit mindestens einem Gewitterfrühwarnsystem nach einem der Ansprüche 1 bis 12.

## Claims

1. Storm early warning system (100, 300, 400, 500) of a vehicle having at least one control device (101, 101a, 101b, 101c, 101d) which has a sensor (102) for detecting at least one electromagnetic signal, and a processor (103) by way of which the signal detected by the sensor (102) can be interpreted and a storm can be detected and having a display device (104, 104a, 104b, 104c, 104d) by way of which a warning signal can be displayed by the processor at least in the case of a detected storm,
**characterised in that**
the display device (104, 104a, 104b, 104c, 104d) can be arranged on or in a rear viewing device (201, 401) of the motor vehicle.

2. Storm early warning system (100, 300, 400, 500) according to claim 1,
**characterised in that**
the display device (104, 104a, 104b, 104c, 104d) can be arranged on an exterior vehicle mirror (201) or an interior vehicle mirror (401).

3. Storm early warning system (100, 300, 400, 500) according to claim 1 or 2,
**characterised in that**
the sensor (102) comprises an antenna (305) which is configured to receive an air electric discharge and/or magnetic radiation originating at least from the storm.

4. Storm early warning system (100, 300, 400, 500) according to claim 3,
**characterised in that**
the antenna (305) comprises a resonance frequency which can be adjusted with an accuracy of approximately +/- 3.5%.

5. Storm early warning system (100, 300, 400, 500) according to claim 3 or 4,
**characterised in that**
the antenna (305) comprises a loop antenna (305a, 305b, 305c, 305d, 305e, 305f, 305g), in particular a loop antenna with a resonance frequency of 500 kHz and a quality factor of 15.

6. Storm early warning system (100, 300, 400, 500) according to any one of the preceding claims, **characterised in that**
the control device (101, 101a, 101b, 101c, 101d) comprises an analogue input step which is configured to amplify and/or demodulate the signal detected by the sensor (102).

7. Storm early warning system (100, 300, 400, 500) according to claim 6,
**characterised in that**
the analogue input step can be calibrated, in particular to signals with a median frequency of 500 kHz and a bandwidth of 33 kHz.

8. Storm early warning system (100, 300, 400, 500) according to any one of the preceding claims, **characterised in that**
the processor (103) is configured to differentiate between the storm and a disturbance based on the signal detected by the sensor (102).

9. Storm early warning system (100, 300, 400, 500) according to claim 8,
**characterised in that**
the processor (103) is configured to determine a distance to the storm based on the signal detected by the sensor (102).

10. Storm early warning system (100, 300, 400, 500) according to claim 9,
**characterised in that**
the display device (104, 104a, 104b, 104c, 104d) is configured to display the distance to the storm determined by the processor (103).

11. Storm early warning system (100, 300, 400, 500) according to claim 9 or 10,
**characterised in that**
the display device (104, 104a, 104b, 104c, 104d) comprises at least one light means which adopts different colours based on the distance to the storm.

12. Storm early warning system (100, 300, 400, 500) according to any one of the preceding claims, **characterised in that**
the control device (101, 101a, 101b, 101c, 101d) has an output which is configured to actuate a sunroof, a window closure system and/or a convertible roof when a storm is detected or when a rain sensor reacts.

13. Rear viewing device for a motor vehicle having at least one storm early warning system (100, 300, 400, 500) according to any one of claims 1 to 12.

14. Method (800) for displaying a storm warning signal on a rear viewing device (201, 401) of a motor vehicle having a storm early warning system (100, 300, 400, 500) according to any one of claims 1 to 12, **characterised by** the following steps:
Detecting (801) a signal originating from a storm;
Calculating (802) the energy of the signal;
Detecting (803) the storm based on the calculated energy of the signal; and
Displaying (804) a storm warning signal on the rear viewing device (201, 401) when the storm is detected.

15. Motor vehicle having at least one rear viewing device according to claim 13, and/or having at least one storm early warning system according to any one of claims 1 to 12.

## Revendications

1. Système d'alerte précoce aux orages (100, 300, 400, 500) d'un véhicule avec au moins un appareil de commande (101, 101a, 101b, 101c, 101d), qui comporte un capteur (102) destiné à la détection d'au moins un signal électromagnétique et un processeur (103) par lequel le signal détecté par le capteur (102) peut être interprété et un orage peut être détecté, et avec un dispositif d'affichage (104, 104a, 104b, 104c, 104d), par lequel un signal d'alerte peut être affiché par le processeur au moins lorsqu'un orage est détecté,
**caractérisé en ce que** le dispositif d'affichage (104, 104a, 104b, 104c, 104d) peut être agencé sur ou dans un dispositif de rétroviseur (201, 401).

2. Système d'alerte précoce aux orages (100, 300, 400, 500) selon la revendication 1, **caractérisé en ce que** le dispositif d'affichage (104, 104a, 104b, 104c, 104d) peut être agencé au niveau d'un rétroviseur extérieur de véhicule (201) ou d'un rétroviseur intérieur de véhicule (401).

3. Système d'alerte précoce aux orages (100, 300, 400, 500) selon la revendication 1 ou 2, **caractérisé en ce que** le capteur (102) comprend une antenne (305) qui est conçue pour recevoir un rayonnement magnétique et/ou une décharge électrique atmosphérique provenant au moins de l'orage.

4. Système d'alerte précoce aux orages (100, 300, 400, 500) selon la revendication 3, **caractérisé en ce que** l'antenne (305) comprend une fréquence de résonance qui peut être réglée avec une précision d'environ ± 3,5 %.

5. Système d'alerte précoce aux orages (100, 300, 400, 500) selon la revendication 3 ou 4, **caractérisé en ce que** l'antenne (305) comprend une antenne à cadre (305a, 305b, 305c, 305d, 305e, 305f, 305g), en particulier une antenne à cadre avec une fréquence de résonance de 500 kHz et une qualité de 15.

6. Système d'alerte précoce aux orages (100, 300, 400, 500) selon l'une des revendications précédentes, **caractérisé en ce que** l'appareil de commande (101, 101a, 101b, 101c, 101d) comprend un étage d'entrée analogique qui est conçu pour amplifier et/ou démoduler le signal détecté par le capteur (102).

7. Système d'alerte précoce aux orages (100, 300, 400, 500) selon la revendication 6, **caractérisé en ce que** l'étage d'entrée analogique peut être calibré, en particulier sur des signaux avec une fréquence moyenne de 500 kHz et une largeur de bande de 33 kHz.

8. Système d'alerte précoce aux orages (100, 300, 400, 500) selon l'une des revendications précédentes, **caractérisé en ce que** le processeur (103) est conçu pour faire la différence entre l'orage et un parasite en se basant sur le signal détecté par le capteur (102).

9. Système d'alerte précoce aux orages (100, 300, 400, 500) selon la revendication 8, **caractérisé en ce que** le processeur (103) est conçu pour déterminer une distance à l'orage en se basant sur le signal détecté par le capteur (102).

10. Système d'alerte précoce aux orages (100, 300, 400, 500) selon la revendication 9, **caractérisé en ce que** le dispositif d'affichage (104, 104a, 104b, 104c, 104d) est conçu pour afficher la distance à l'orage qui a été déterminée par le processeur (103).

11. Système d'alerte précoce aux orages (100, 300, 400, 500) selon la revendication 9 ou 10, **caractérisé en ce que** le dispositif d'affichage (104, 104a, 104b, 104c, 104d) comprend au moins un dispositif d'éclairage qui prend différentes couleurs en fonction de la distance à l'orage.

12. Système d'alerte précoce aux orages (100, 300, 400, 500) selon l'une des revendications précédentes, **caractérisé en ce que** l'appareil de commande (101, 101a, 101b, 101c, 101d) comprend une sortie qui est conçue pour commander un toit ouvrant, un dispositif de fermeture de fenêtre et/ou une capote de cabriolet lorsqu'un orage est détecté ou lorsqu'un capteur de pluie réagit.

13. Dispositif de rétroviseur pour un véhicule automobile avec au moins un système d'alerte précoce aux orages (100, 300, 400, 500) selon l'une des revendications 1 à 12.

14. Procédé (800) destiné à afficher un signal d'alerte aux orages au niveau d'un dispositif de rétroviseur (201, 401) d'un véhicule automobile avec un système d'alerte précoce aux orages (100, 300, 400, 500) selon l'une des revendications 1 à 12, **caractérisé par** les étapes suivantes :
détection (801) d'un signal provenant d'un orage ;
calcul (802) d'une énergie du signal ;
détection (803) de l'orage en se basant sur l'énergie calculée du signal ; et
affichage (804) d'un signal d'alerte aux orages au niveau du dispositif de rétroviseur (201, 401) lors de la détection de l'orage.

15. Véhicule automobile avec au moins un dispositif de rétroviseur selon la revendication 13, et/ou avec au moins un système d'alerte précoce aux orages selon l'une des revendications 1 à 12.
